# EUROPÄISCHE PATENTSCHRIFT

(11) **EP 1 605 013 B1**
(45) Veröffentlichungstag und Bekanntmachung des Hinweises auf die Patenterteilung: **05.12.2007**
(21) Anmeldenummer: 05009648.6
(22) Anmeldetag: 03.05.2005
(51) Int. Cl.: C08J 9/16, C08J 9/00, C08L 25/06

(54) **Expandierbares Polystyrol**
Expandable polystyrene
Polystyrène expansible

(30) Priorität: 13.05.2004 DE 102004023591
(43) Veröffentlichungstag der Anmeldung: 14.12.2005
(73) Patentinhaber: Clariant Produkte (Deutschland) GmbH, 65929 Frankfurt am Main (DE)
(72) Erfinder: Lechner, Christian, 86857 Hurlach (DE); Hohner, Gerd, Dr., 86368 Gersthofen (DE)

(56) Entgegenhaltungen:
- EP-A- 0 321 852
- EP-A- 0 821 028
- EP-A- 0 969 037
- EP-A- 1 508 579
- US-A- 3 398 105

## Beschreibung

Die Erfindung bezieht sich auf expandierbares Polystyrol (EPS), enthaltend Polyolefinwachse, die mit Hilfe von Metallocenkatalysatoren hergestellt wurden.

Von besonderer Wichtigkeit bei der Herstellung von expandierbarem Polystyrol ist die Schaumstruktur. Homogenität und Größe der einzelnen Zellen bestimmen die Schäumeigenschaften, d.h. Expandierbarkeit und Druckabbauzeit sowie die Schaumstoffeigenschaften wie beispielsweise Oberflächengüte, mechanische (Steifigkeit) und optische Eigenschaften. Mit zunehmender Zellzahl, d.h. feineren Zellen sinken die Entformzeiten (Druckabbauzeiten) drastisch, eine Erhöhung der Zellzahlen von 6 auf 12 pro mm bewirkt in etwa eine Halbierung der Entformungszeit. Damit wird die Wirtschaftlichkeit bei der Herstellung wesentlich erhöht. Feinere Zellstrukturen bewirken außerdem eine erhöhte Steifigkeit sowie ein optisch "weißeres" Erscheinungsbild.

Diese anzustrebende homogene und feinere Zellstruktur wird mit Hilfe von sogenannten Keimbildnern (Nukleierungsmitteln) erreicht, welche bei der Polymerisation von expandierbarem Polystyrol zugegeben werden. In Abwesenheit dieser Keimbildner werden unterschiedlich große Zellen gebildet. Dies wirkt sich negativ auf die oben beschriebenen mechanischen und optischen Eigenschaften des Schaums aus.

Als mögliche Keimbildner sind Polyethylen bzw. Polyolefinwachse, Paraffine und Fischer-Tropsch-Wachse bekannt. In der Regel werden unverzweigte, unpolare, d.h. nicht modifizierte Polyethylenwachse verwendet.

In den US-Patentschriften US-A-3,224,984 und US-A-3,398,105 wird der Einsatz von Polyethylenwachsen bzw. Polyethylen mit einem Molekulargewicht von 1.000 bis 4.000 in einer Konzentration von 0,01 bis 0,5 % beschrieben.

Die US-A-3,060,138 beschreibt die Verwendung von Paraffinwachsen mit Kettenlängen von 16 bis 46 Kohlenstoffatomen als Keimbildner für expandierbares Polystyrol.

In der DE-A-324 38 85 wird die Verwendung von linearen Polyethylenwachsen in Konzentrationen von 0,05 bis 0,5 Gew. %, einem Molekulargewicht von 700 bis 1.500 g/mol, einem Schmelzpunkt von mindestens 102°C, einer Dichte von mindestens 15,4 g/cm³ sowie einer Polydispersität von kleiner als 1,2 (Polydispersität = Quotient aus gewichtsmittlerem Molekulargewicht und zahlenmittlerem Molekulargewicht) beschrieben.

Überraschend wurde nun gefunden, dass sich mit Hilfe von Metallocenkatalysatoren hergestellte Polyolefinwachse in besonders vorteilhafter Weise als Nukleierungsmittel für EPS eignen. Insbesondere ergab sich, dass Metallocenwachs enthaltendes expandierbares Polystyrol überragend positive Eigenschaften in Bezug auf die Feinheit und Homogenität der Zellstruktur von expandierbarem Polystyrol besitzt. Die Zellzahl von expandierbarem Polystyrol gegenüber herkömmlich eingesetzten Keimbildnern bezogen auf eine definierte Fläche wird durch die Verwendung von Polyolefinwachsen, welche durch Metallocenkatalyse hergestellt wurden, deutlich erhöht, was sich in besserer Mechanik (Steifigkeit, verringerte Eindrückbarkeit) des Schaums, optisch "weißerem" Erscheinungsbild sowie deutlich beschleunigtem Druckabfall, d.h. erhöhter Entformungsgeschwindigkeit ausdrückt. Weiterhin wird die Zellgröße dahingehend reguliert, dass sich homogene Zellen ohne wesentliche Größenunterschiede zueinander ausbilden.

Gegenstand der Anmeldung ist daher expandierbares Polystyrol, enthaltend Polyolefinwachse, wobei letztere mit Hilfe von Metallocenkatalysatoren hergestellt wurden und einen Tropf- oder Erweichungspunkt Ring/Kugel zwischen 80 und 165°C und eine Schmelzviskosität, gemessen bei einer Temperatur 10°C oberhalb des Tropf- oder Erweichungspunktes, zwischen 20 und 10.000 mPa.s aufweisen.

Hierbei wurden die Schmelzviskositäten nach DIN 53019 mit einem Rotationsviskosimeter, die Tropfpunkte nach DIN 51801/2, die Erweichungspunkte Ring/Kugel nach DIN EN 1427 bestimmt.

Bevorzugt weisen die Polyolefinwachse einen Tropf- oder Erweichungspunkt Ring/Kugel zwischen 90 und 160°C und eine Schmelzviskosität, gemessen bei einer Temperatur 10°C oberhalb des Tropf- oder Erweichungspunktes, zwischen 30 und 8.000 mPa.s auf.

Bevorzugt weisen die Polyolefinwachse eine gewichtsmittlere Molmasse Mw zwischen 1.000 und 30.000 g/mol und eine zahlenmittlere Molmasse Mn zwischen 500 und 20.000 g/mol auf.

Besonders bevorzugt weisen die Polyolefinwachse eine gewichtsmittlere Molmasse Mw zwischen 2.000 und 10.000 und eine zahlenmittlere Molmasse zwischen 800 und 3.000 auf.

Bevorzugt sind als Polyolefinwachse Ethylenhomopolymerwachse enthalten.

Bevorzugt sind als Polyolefinwachse Copolymerwachse aus Ethylen und 0,1 bis 30 Gew.-% mindestens eines verzweigten oder unverzweigten 1-Alkens mit 3 bis 20 C-Atomen enthalten.

Bevorzugt sind auch als Polyolefinwachse Propylenhomopolymerwachse enthalten.

Bevorzugt sind als Polyolefinwachse Copolymerwachse aus Propylen und 0,1 bis 30 Gew.-% Ethylen und/oder mindestens eines verzweigten oder unverzweigten 1-Alkens mit 4 bis 20 C-Atomen enthalten.

Bevorzugt sind weiterhin Füllstoffe oder Hilfsstoffe wie Blähmittel, Pigmente und Antioxidantien sowie Lichtschutz, Flammschutzmittel oder Antistatika enthalten.

Als Polyolefinwachse kommen Homopolymerisate des Ethylens oder höherer 1-Olefine oder deren Copolymerisate untereinander in Frage. Als 1-Olefine werden lineare oder verzweigte Olefine mit 3 bis 18 C-Atomen, vorzugsweise 3 bis 6 C-Atomen, eingesetzt. Diese Olefine können eine mit der olefinischen Doppelbindung in Konjugation stehende aromatische Substitution aufweisen. Beispiele hierfür sind Propen, 1-Buten, 1-Hexen, 1-Octen oder 1-Octadecen sowie Styrol. Bevorzugt sind Homopolymerisate des Ethylens oder Propens oder deren Copolymerisate untereinander. Die Copolymeren bestehen zu 70 bis 99,9, bevorzugt zu 80 bis 99 Gew.-% aus einer Olefinart.

Geeignet sind Olefin-Homo- und Copolymerwachse mit einer gewichtsmittleren Molmasse M_{w} zwischen 1.000 und 30.000 g/mol, bevorzugt zwischen 2.000 und 10000 g/mol, einer zahlenmittleren Molmasse Mₙ zwischen 500 und 20.000 g/mol, bevorzugt zwischen 800 und 3.000 g/mol, einem Tropf- bzw. Erweichungspunkt Ring/Kugel zwischen 80 und 165°C, bevorzugt zwischen 90 und 160°C und einer Schmelzviskosität, gemessen bei einer Temperatur 10°C oberhalb des Tropf- bzw. Erweichungspunktes, zwischen 20 und 10.000 mPa.s, bevorzugt zwischen 30 und 8.000 mPa.s.

Das erfindungsgemäße expandierbare Polystyrol kann zusätzlich Füllstoffe oder Hilfsstoffe wie Pigmente, Blähmittel und Antioxidantien sowie weitere Polymeradditive wie Flammschutzmittel, Antistatika und Lichtschutzmittel enthalten.

Für die Herstellung der erfindungsgemäß verwendeten Polyolefinwachse werden Metallocenverbindungen der Formel I eingesetzt.

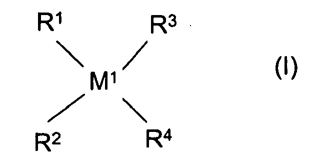

Diese Formel umfasst auch Verbindungen der Formel Ia, 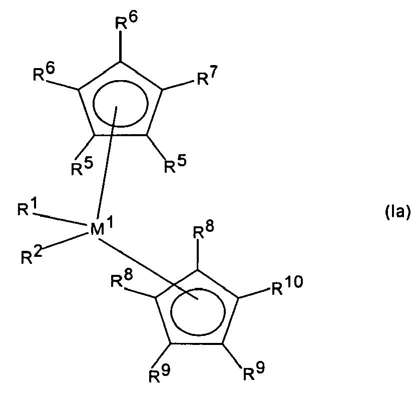 der Formel Ib 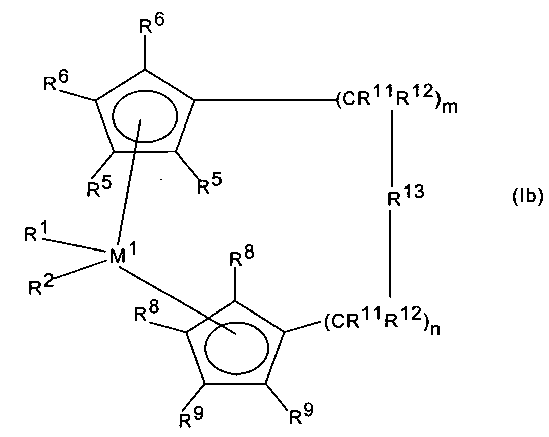 und der Formel Ic

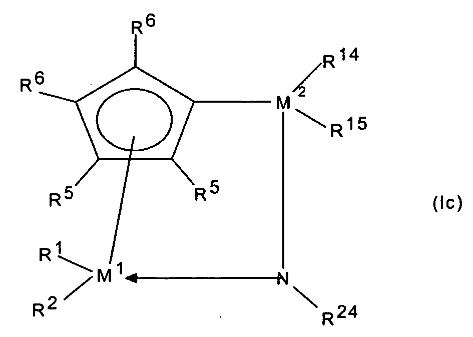

In den Formeln I, la und Ib ist M¹ ein Metall der Gruppe IVb, Vb oder Vlb des Periodensystems, beispielsweise Titan, Zirkonium, Hafnium, Vanadium, Niob, Tantal, Chrom, Molybdän, Wolfram, vorzugsweise Titan, Zirkonium, Hafnium. R¹ und R² sind gleich oder verschieden und bedeuten ein Wasserstoffatom, eine C₁-C₁₀, vorzugsweise C₁-C₃-Alkylgruppe, insbesondere Methyl, eine C₁-C₁₀-, vorzugsweise C₁-C₃-Alkoxygruppe, eine C₆-C₁₀, vorzugsweise C₆-C₈-Arylgruppe, eine C₆-C₁₀-, vorzugsweise C₆-C₈-Aryloxygruppe, eine C₂-C₁₀, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogen-, vorzugsweise Chloratom.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, tert.-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀-, vorzugsweise C₆-C₈-Arylgruppe, eine C₁-C₁₀-, vorzugsweise C₁-C₃-Alkoxygruppe, einen -NR¹⁶₂-, -SR¹⁶-, -OSiR¹⁶₃-, -SiR¹⁶₃- oder -PR¹⁶₂-Rest, worin R¹⁶ eine C₁-C₁₀-, vorzugsweise C₁-C₃-Alkylgruppe oder C₆-C₁₀-, vorzugsweise C₆-C₈-Arylgruppe oder im Falle Si oder P enthaltender Reste auch ein Halogenatom, vorzugsweise Chloratom ist oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.

R¹³ ist 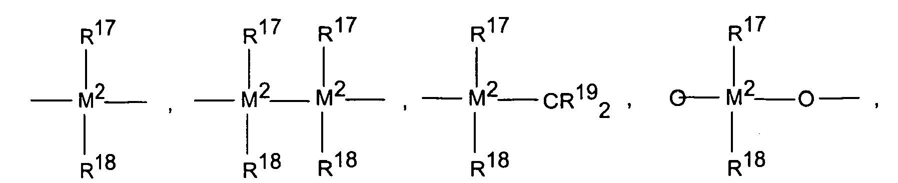 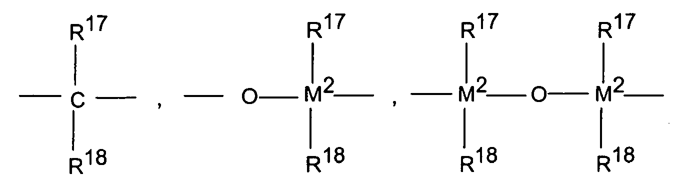 =BR¹⁷, =AIR¹⁷, -Ge-, -Sn-, -O-, -S-, =SO, =SO₂, =NR¹⁷, =CO, =PR¹⁷ oder =P(O)R¹⁷, wobei R¹⁷ , R¹⁸ und R¹⁹ gleich oder verschieden sind und ein Wasserstoffatom, ein Halogenatom, vorzugsweise ein Fluor-, Chlor- oder Bromatom, eine C₁-C₃₀-, vorzugsweise C₁-C₄-Alkyl-, insbesondere Methylgruppe, eine C₁-C₁₀-Fluoralkyl-, vorzugsweise CF₃-Gruppe, eine C₆-C₁₀-Fluoraryl-, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxy-, insbesondere Methoxygruppe, eine C₂-C₁₀, vorzugsweise C₂-C₄-Alkenylgruppe, eine C₇-C₄₀-, vorzugsweise C₇-C₁₀-Aralkylgruppe, eine C₈-C₄₀-, vorzugsweise C₈-C₁₂-Arylalkenylgruppe oder eine C₇-C₄₀, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Beispiele für geeignete Metallocene sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-i.propyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethytcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4, 5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsityl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid,
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid
Isopropyliden(1-indenyl)(cyclopentadienyl)zirkoniumdichlorid,
Isopropyliden(9-fluorenyl)(cyclopentadienyl)zirkoniumdichlorid,
Phenylmethylsilyl-bis-1-(2-methyl-indenyl)zirkoniumdichlorid,
sowie jeweils die Alkyl- oder Aryl-Derivate dieser Metallocendichloride.
Zur Aktivierung der Einzentren-Katalysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie R²⁰ₓNH₄₋ₓBR²¹₄, R²⁰ₓPH₄₋ₓBR²¹₄, R²⁰₃CBR²¹₄ oder BR²¹₃. In diesen Formeln bedeutet x eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bistrifluormethylphenyl, Mesityl, Xylyl oder Tolyl.

Zusätzlich ist häufig eine dritte Komponente erforderlich, um einen Schutz von polaren Katalysator-Giften aufrecht zu erhalten. Hierzu sind aluminiumorganische Verbindung wie z.B. Triethylaluminium, Tributylaluminium und andere sowie Mischungen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Die Herstellung derartiger Polyolefinwachse ist beispielsweise in den Dokumenten EP-A-0 321 851, EP-A-0 321 852 sowie EP-A-0 384 264 beschrieben.

Die Polyolefinwachse sind in expandierbarem Polystyrol mit einem Gewichtsanteil zwischen 0,01 und 10 %, bevorzugt zwischen 0,03 und 5 % enthalten.

### Anwendungstechnische Prüfergebnisse

Zur Durchführung der Suspensionspolymerisation wurden in einem Stahlkessel Wasser (vollentsalzt), als Suspendierhilfsmittel DMS (dimeres α-Methylstyrol) sowie das auszuprüfende Wachs vorgelegt. Anschließend wurden Styrol und Starter (Peroxid) zudosiert. Nach Rühren über zwei Stunden wurde die Mischung auf 100°C erhitzt und die Temperatur 5,5 Stunden gehalten. Danach wird die Temperatur auf 130°C erhöht und 2 Stunden gehalten. Nach Abkühlen auf ca. 80-85°C wird zunächst Suspensionsstabilisator und danach n-Pentan über 1,5 Stunden zu dosiert.

Die enthaltenen Perlen wurden abzentrifugiert und mit Luft getrocknet und gekühlt, mit EBS (Bis-stearoylethylendiamin) als Trennmittel beschichtet und eine Perlgrößenfraktion von 1-2 mm abgesiebt. Diese wurde diskontinuierlich drucklos vorgeschäumt und anschließend zu einem Quader mit 1,2 bar Dampfdruck aufgeschäumt. Dabei wurde der Druckabbau, d.h. die Zeit für die Entformung bestimmt sowie an einer Schnittfläche mikroskopisch die Zellenanzahl pro mm ermittelt. Ebenso wurde die Schaumstruktur optisch beurteilt und bewertet, inwieweit die Zellstruktur homogen (gleiche Zellgrößen) oder inhomogen (unterschiedlich große Zellen) ist. Insbesondere kleine gleichmäßige Zellen ergeben ein weißes Erscheinungsbild der Schnittfläche, unterschiedliche Zellgrößen erzeugen ein gräuliches Erscheinungsbild.

Die Molmassengewichtsmittel M_{w} und Mₙ der eingesetzten Wachse wurden durch Gelpermeationschromatographie bei 135°C in 1,2-Dichlorbenzol ermittelt.

### Beispiele:

### Beispiel 1 (Vergleichsbeispiel):

Die oben beschriebene Reaktion wurde ohne Zusatz eines Wachses durchgeführt.

### Beispiel 2:

Die Reaktion wurde mit 0,1 Gew.-% eines Metallocen-Polyethylenwachses (Homopolymer) der Fa. Clariant, Handelsname TP Licocene® PE 4201, durchgeführt (Mₙ= 1200 g/mol, M_{w} = 2400 g/mol, Tropfpunkt 123°C, Viskosität bei 140°C 60 mPa.s).

### Beispiel 3:

Die Reaktion wurde mit 0,1 Gew.-% eines Metallocen-Polyethylenwachses (Copolymer mit 5 Gew.-% Propen) durchgeführt (Mₙ= 2300 g/mol, M_{w} = 5100 g/mol, Tropfpunkt 118°C, Viskosität bei 140°C 900 mPa.s).

### Beispiel 4:

Die Reaktion wurde mit 0,1 % eines Ziegler Polyethylenwachses durchgeführt. (Mₙ = 1600 g/mol, M_{w} = 4800 g/mol, Tropfpunkt 130°C, Viskosität bei 140°C 550 mPa.s).

### Beispiel 5:

Die Reaktion wurde mit 0,1 % eines Polyethylenwachses, welches nach dem Hochdruckverfahren hergestellt wurde, durchgeführt (Mₙ = 1500 g/mol, M_{w} = 3500 g/mol, Tropfpunkt 110°C, Viskosität bei 140°C 700 mPa.s).

### Beispiel 6:

Die Reaktion wurde mit 0,1% eines hochmolekularen Ziegler-Polyethylenwachses durchgeführt (Mₙ = 5500 g/mol, M_{w} = 18000 g/mol, Tropfpunkt 135°C, Viskosität bei 140°C 23000 mPa.s).

| Auswertung: | | | |
|---|---|---|---|
| Beispiel | Zellenzahl/mm⁻¹ | Entformungszeit [s] | Schaumstruktur |
| 1 (Vgl.) | 6 | 490 | inhomogen, "grau" |
| 2 | 15 | 110 | homogen, reinweiß |
| 3 | 13 | 120 | homogen, reinweiß |
| 4 (Vgl.) | 10 | 150 | homogen, weiß |
| 5 (Vgl.) | 8 | 230 | inhomogen, "grau" |
| 6 (Vgl.) | 7 | 270 | Inhomogen, "grau" |

Wie aus der Tabelle hervorgeht, führt der Einsatz von mittels Metallocenkatalysatoren hergestellten Wachsen zu vergleichsweise höheren Zellenzahlen, geringeren Entformungszeiten und einer vorteilhafteren Schaumstruktur.

## Patentansprüche

1. Expandierbares Polystyrol, enthaltend zwischen 0,01 und 10 Gew.-% Polyolefinwachse, wobei die Polyolefinwachse mit Hilfe von Metallocenkatalysatoren hergestellt werden und einen Tropf- oder Erweichungspunkt Ring/Kugel zwischen 80 und 165 °C und eine Schmelzviskosität, gemessen bei einer Temperatur 10 °C oberhalb des Tropf- oder Erweichungspunktes, zwischen 20 und 10.000 mPa·s aufweisen.

2. Expandierbares Polystyrol nach Anspruch 1, **dadurch gekennzeichnet, dass** die Polyolefinwachse einen Tropf- oder Erweichungspunkt Ring/Kugel zwischen 90 und 160 °C und eine Schmelzviskosität, gemessen bei einer Temperatur 10 °C oberhalb des Tropf- oder Erweichungspunktes, zwischen 30 und 8.000 mPa·s aufweisen.

3. Expandierbares Polystyrol nach den Ansprüchen 1 oder 2, **dadurch gekennzeichnet, dass** die Polyolefinwachse eine gewichtsmittlere Molmasse M_{w} zwischen 1.000 und 30.000 g/mol und eine zahlenmittlere Molmasse Mn zwischen 500 und 20.000 g/mol aufweisen.

4. Expandierbares Polystyrol nach den Ansprüchen 1 und 2, **dadurch gekennzeichnet, dass** die Polyolefinwachse eine gewichtsmittlere Molmasse M_{w} zwischen 2000 und 10.000 und eine zahlenmittlere Molmasse zwischen 800 und 3.000 aufweisen.

5. Expandierbares Polystyrol nach einem oder mehreren der Ansprüche 1 bis 4, enthaltend als Polyolefinwachse Ethylenhomopolymerwachse.

6. Expandierbares Polystyrol nach einem oder mehreren der Ansprüche 1 bis 4, enthaltend als Polyolefinwachse Copolymerwachse aus Ethylen und 0,1 bis 30 Gew.-% mindestens eines verzweigten oder unverzweigten 1-Alkens mit 3 bis 20 C-Atomen.

7. Expandierbares Polystyrol nach einem oder mehreren der Ansprüche 1 bis 4, enthaltend als Polyolefinwachse Propylenhomopolymerwachse.

8. Expandierbares Polystyrol nach einem oder mehreren der Ansprüche 1 bis 4, enthaltend als Polyolefinwachse Copolymerwachse aus Propylen und 0,1 bis 30 Gew.-% Ethylen und/oder mindestens eines verzweigten oder unverzweigten 1-Alkens mit 4 bis 20 C-Atomen.

9. Expandierbares Polystyrol nach einem oder mehreren der Ansprüche 1 bis 8, **dadurch gekennzeichnet, dass** es weiterhin Füllstoffe oder Hilfsstoffe enthält.

10. Expandierbares Polystyrol nach Anspruch 9, **dadurch gekennzeichnet, dass** es als Hilfsstoffe Blähmittel, Pigmente und Antioxidantien sowie Lichtschutz, Flammschutzmittel oder Antistatika enthält.

## Claims

1. An expandable polystyrene comprising from 0.01 to 10% by weight of polyolefin waxes, wherein the polyolefin waxes are prepared by means of metallocene catalysts and have a drop melting point or ring/ball softening point of from 80 to 165°C and a melt viscosity measured at a temperature which is 10°C above the drop melting point or softening point of from 20 to 10 000 mPa.s.

2. The expandable polystyrene as claimed in claim 1, wherein the polyolefin waxes have a drop melting point or ring/ball softening point of from 90 to 160°C and a melt viscosity measured at a temperature which is 10°C above the drop melting point or softening point of from 30 to 8000 mPa.s.

3. The expandable polystyrene as claimed in claim 1 or 2, wherein the polyolefin waxes have a weight average molar mass M_{w} of from 1000 to 30000g/mot and a number average molar mass Mₙ of from 500 to 20 000 g/mol.

4. The expandable polystyrene as claimed in claim 1 or 2, wherein the polyolefin waxes have a weight average molar mass M_{w} of from 2000 to 10 000 and a number average molar mass of from 800 to 3000.

5. The expandable polystyrene as claimed in one or more of claims 1 to 4 comprising ethylene homopolymer waxes as polyolefin waxes.

6. The expandable polystyrene as claimed in one or more of claims 1 to 4 comprising copolymer waxes comprising ethylene and from 0.1 to 30% by weight of at least one branched or unbranched 1-alkene having from 3 to 20 carbon atoms as polyolefin waxes.

7. The expandable polystyrene as claimed in one or more of claims 1 to 4 comprising propylene homopolymer waxes as polyolefin waxes.

8. The expandable polystyrene as claimed in one or more of claims 1 to 4 comprising copolymer waxes comprising propylene and from 0.1 to 30% by weight of ethylene and/or at least one branched or unbranched 1-alkene having from 4 to 20 carbon atoms as polyolefin waxes.

9. The expandable polystyrene as claimed in one or more of claims 1 to 8 which further comprises fillers or auxiliaries.

10. The expandable polystyrene as claimed in claim 9 which comprises blowing agents, pigments and antioxidants and also light stabilizers, flame retardants or antistatics as auxiliaries.

## Revendications

1. Polystyrène expansible contenant entre 0,01 et 10 % en masse de cires de polyoléfines, les cires de polyoléfines sont préparées à l'aide de catalyseurs métallocènes et présentent un point de goutte ou point de ramollissement anneau et bille compris entre 80 et 165°C et une viscosité à chaud, mesurée à une température supérieure de 10°C au point de goutte ou de ramollissement comprise entre 20 et 10.000 mPa.s.

2. Polystyrène expansible selon la revendication 1, **caractérisé en ce que** les cires de polyoléfines présentent un point de goutte ou point de ramollissement anneau et bille compris entre 90 et 160°C et une viscosité à chaud mesurée à une température supérieure de 10°C au point de goutte ou point de ramollissement comprise entre 30 et 8.000 mPa.s.

3. Polystyrène expansible selon les revendications 1 ou 2, **caractérisé en ce que** les cires de polyoléfines présentent une masse moléculaire moyenne en poids Mw entre 1.000 et 30.000 g/mole et une masse moléculaire moyenne en nombre Mn entre 500 et 20.000 g/mole.

4. Polystyrène expansible selon les revendications 1 et 2, **caractérisé en ce que** les cires de polyoléfines présentent une masse moléculaire moyenne en poids Mw comprise entre 2000 et 10.000 et une masse moléculaire moyenne en nombre Mn entre 800 et 3.000.

5. Polystyrène expansible selon une ou plusieurs des revendications 1 à 4, contenant en tant que cires de polyoléfines des cires d'homopolymères d'éthylène.

6. Polystyrène expansible selon une ou, plusieurs des revendications 1 à 4, contenant en tant que cires de polyoléfines des cires de copolymères d'éthylène et de 0,1 à 30 % en masse d'au moins un 1-alcène ramifié ou non ramifié ayant 3 à 20 atomes de carbone.

7. Polystyrène expansible selon une ou plusieurs des revendications 1 à 4, contenant en tant que cires de polyoléfines des cires d'homopolymères de propylène.

8. Polystyrène expansible selon une ou plusieurs des revendications 1 à 4, contenant en tant que cires de polyoléfines des cires de copolymères de propylène et de 0,1 à 30 % en masse d'éthylène et/ou d'au moins un 1-alcène ramifié ou non ramifié ayant 4 à 20 atomes de carbone.

9. Polystyrène expansible selon une ou plusieurs des revendications 1 à 8, **caractérisé en ce qu'**il contient de plus des charges ou additifs.

10. Polystyrène expansible selon la revendication 9, **caractérisé en ce qu'**il contient en tant qu'additifs des agents porogènes, pigments et antioxydants, ainsi que des agents photoprotecteurs, agents protecteurs contre les flammes ou antistatiques.
